# EUROPÄISCHE PATENTSCHRIFT

(11) **EP 3 619 507 B1**
(45) Veröffentlichungstag und Bekanntmachung des Hinweises auf die Patenterteilung: **09.06.2021**
(21) Anmeldenummer: 18716613.7
(22) Anmeldetag: 10.04.2018
(51) Int. Cl.: G01F 25/00, G01F 23/284, G01F 23/296

(54) **VERFAHREN ZUR BESTIMMUNG UND/ODER ÜBERWACHUNG DES FÜLLSTANDS**
METHOD FOR DETERMINING AND/OR MONITORING THE FILL LEVEL
DISPOSITIF POUR DÉFINIR ET/OU SURVEILLER LE NIVEAU DE REMPLISSAGE

(30) Priorität: 02.05.2017 DE 102017109316
(43) Veröffentlichungstag der Anmeldung: 11.03.2020
(73) Patentinhaber: Endress+Hauser SE+Co. KG, 79689 Maulburg (DE)
(72) Erfinder: MÜLLER, Daniel, 79594 Inzlingen (DE); PANKRATZ, Klaus, 79400 Kandern (DE); GRETH, Simon, 79541 Lörrach (DE)
(74) Vertreter: Andres, Angelika Maria
(86) Internationale Anmeldenummer: PCT/EP2018/059101
(87) Internationale Veröffentlichungsnummer: WO 2018/202387

(56) Entgegenhaltungen:
- EP-A1- 2 128 576
- EP-A2- 0 668 488
- WO-A2-2011/076478
- DE-A1- 10 325 267
- DE-A1-102004 041 857
- DE-A1-102008 016 940
- DE-A1-102010 042 525
- US-A1- 2005 134 501
- US-A1- 2012 130 509

## Beschreibung

Die Erfindung betrifft Verfahren zur Bestimmung und/oder Überwachung des Füllstands eines Füllguts in einem Behälter einer Prozessanlage mit einem nach dem Laufzeitprinzip arbeitenden Füllstandsmessgerät.

Bei nach dem Laufzeitprinzip arbeitenden Füllstandsmessgeräten wird zur Ermittlung des Füllstands eine sogenannte Echokurve aufgenommen und ausgewertet. Jeder Messwert der Echokurve entspricht der Amplitude eines in einem bestimmten Abstand an einer Oberfläche reflektierten Echosignals. Bei dem Sender handelt es sich beispielsweise um eine Antennenvorrichtung, über die Mikrowellen ausgesendet werden.

Die Laufzeit-Messmethode wird im Wesentlichen in zwei Ermittlungsverfahren eingeteilt: Bei der Zeitdifferenzmessung wird die Zeit, die ein breitbandiger Wellensignalimpuls für eine zurückgelegte Wegstrecke benötigt, ermittelt. Bei der Kippfrequenzdifferenzmessung (FMCW - Frequency-Modulated Continuous Wave) wird eine kontinuierliche Mikrowelle gesendet, die periodisch linear frequenzmoduliert ist. Die Frequenz eines empfangenen Echosignals weist daher gegenüber der Augenblicksfrequenz eine Frequenzdifferenz auf, die von der Laufzeit des Echosignals abhängt. Die Frequenzdifferenz zwischen Sendesignal und Empfangssignal, die durch Mischung beider Signale und Auswertung des Fourierspektrums des Mischsignals gewonnen werden kann, entspricht somit der Abstand der reflektierenden Fläche von der Antenne. Ferner entsprechen die Amplituden der Spektrallinien des durch Fouriertransformation gewonnenen Frequenzspektrums. Im Weiteren wird keine Beschränkung auf ein spezielles Ermittlungsverfahren gemacht.

Bekannt sind weiterhin Laufzeit- Füllstandsmessgeräte, welche statt mit Mikrowellen oder anderen elektromagnetischen Wellen mit Ultraschallwellen arbeiten. Laufzeit-Füllstandsmessgeräte werden von der Anmelderin in unterschiedlichen Ausgestaltungen hergestellt und vertrieben.

Die Echokurve umfasst dabei typischerweise ein Echosignal, welches der Reflexion des Sendesignals an der Füllgutoberfläche entspricht; dieses wird als Nutzechosignal bezeichnet. Die Echokurve umfasst aber auch weitere, als Störechosignale bezeichnete Echosignale. Diese Störechosignale können beispielsweise durch Reflexionen des Sendesignals an Einbauten in dem Behälter, durch Mehrwegeausbreitung und durch Mehrmodenausbreitung, durch Schaum- und Ansatzbildung des Füllguts und/oder durch turbulente Füllgutsoberflächen entstehen.

Die Auswertung einer Echokurve umfasst daher zunächst eine Detektion von mehreren Echosignalen der Echokurve und eine sich daran anschließende Identifikation von Störechosignalen und des Nutzechosignals.

Der Füllstand wird anschließend aus der Laufzeit der Nutzechosignals berechnet. Gegebenenfalls findet vor der Identifikation des Nutzechosignals und der Störechosignale noch die Erstellung einer die Echokurve einhüllenden Hüllkurve und/oder eine Glättung der Hüllkurve statt; hierzu kann beispielsweise das in der DE 10 2014 119 589 A1 beschriebene Glättungsverfahren verwendet werden. Bei der Erstellung der Hüllkurve und/oder der Glättung kommen häufig verschiedene frei wählbare Parameter, beispielsweise in einem Algorithmus, zum Einsatz. Ein Verfahren zur Laufzeit-basierten Füllstandmessung ist in US 2012/130509 A1 offenbart.

Eine Herausforderung bei der Laufzeit-basierten Füllstandsmessung stellt die zuverlässige Identifikation des Nutzechosignals dar. Im Stand der Technik sind hierzu mehrere Verfahren bekannt, welche unterschiedlichen Problematiken begegnen. Bekannt sind zum Beispiel als "Echoverfolgung" bezeichnete dynamische Verfahren zur Identifikation des Nutzechosignals. In diesen wird dem Füllstandsmessgerät einmalig der aktuelle Füllstand vorgegeben. Das Füllstandsmessgerät kann anhand des vorgegebenen Füllstandes das zugehörige Echosignal als das Nutzechosignal identifizieren und dieses durch einen geeigneten Algorithmus verfolgen. Ein Beispiel hierzu ist in der europäischen Patentschrift EP 1695043 B1 beschrieben. Eine solche Echoverfolgung hat den Nachteil, dass das Echosignal ohne Unterbrechung verfolgt werden muss; dies ist z.B. bei einem wartungsbedingten Unterbruch nicht immer möglich. Zusätzlich können Probleme auftreten, falls im Betrieb das Nutzechosignal im Bereich eines Störechosingales liegt. Dies bedeutet, dass die Laufzeit eines Störechosignals zu einem Zeitpunkt der Laufzeit des Nutzechosignals entspricht, wodurch der Fall auftreten kann, dass nachfolgend fälschlicherweise das Störechosignal anstelle des Nutzechosignals verfolgt wird.

Zur Überwindung diese Problems ist in der europäischen Patentschrift EP 1 573 278 B1 ein Verfahren beschrieben, bei dem im Anschluss an eine erste Inbetriebnahme vom Füllstandsmessgerät eine Tabelle erstellt und nachfolgend zur Füllstandsmessung verwendet wird. Dort ist zusätzlich beschrieben, anhand von Historiendaten Plausibilitätskontrollen durchzuführen. Wird dabei erkannt, dass ein falsches Echosignal als Nutzechosignal betrachtet wird, wird das Verfahren angepasst, um das richtige Echosignal weiter zu verfolgen.

In der DE 10 2013 103 532 A1 ist ein weiteres, auf einer derartigen Tabelle beruhendes Verfahrens offenbart. Dieses liefert auch dann noch zuverlässige Messergebnisse, wenn sich die Messbedingungen am Einsatzort des Füllstandsmessgeräts ändern. In dem bekannten Verfahren wird anhand der historischen und der aktuellen Echosignale eine Plausibilitätskontrolle durchgeführt, um als nicht plausibel erkannte historische und/oder aktuelle Echosignale aus der Tabelle zu entfernen.

Ein weiteres Beispiel einer verbesserten Echoverfolgung ist in der Offenlegungsschrift DE 20 2006 062 606 A1 beschrieben. Darin wird die Echoverfolgung mit einem statischen Echosuchalgorithmus kombiniert, beispielsweise einer Ausblendkurve zur Ausblendung der Störechosignale.

Genau wie bei der Hüllkurvenerstellung und/oder Glättung kommen in allen derartigen dynamischen und/oder statischen Verfahren zur Identifikation von Nutzechosignal und Störechosignalen frei wählbare Parameter, beispielsweise in einem Algorithmus, zum Einsatz.

Je nach Anwendung eignen sich jeweils unterschiedliche Parameter, welche üblicherweise bei Inbetriebnahme gewählt werden. Hierzu ist in der Offenlegungsschrift DE 102 609 59 A1 beschrieben, verschiedene Parametersätze für verschiedene Anwendungen in einem Speicher abzulegen. Eine Auswerteeinheit des Messgeräts dient dazu, einen Parametersatz auszuwählen, welcher bei einer anschließenden Messung verwendet wird. Dadurch ist das Füllstandsmessgerät prinzipiell in unterschiedlichen Anwendungen einsetzbar.

Allerdings können auch Situationen vorliegen, in denen es gewünscht ist, eine derartige Anpassung der Auswertung, wie z.B. die Auswahl von frei wählbaren Parametern dynamisch, d.h. während des Messbetriebs, vorzunehmen. Dies ist zum Beispiel der Fall, wenn das Füllgut und/oder der Behälter bestimmten Prozessen der Prozessanlage unterzogen werden/wird, welche einen Einfluss auf die Echokurve haben/hat. Ein aktuell ablaufender Prozess kann das Füllgut und/oder den Behälter derart beeinflussen, dass eine veränderte Auswertung der Echokurve wie eine angepasste Wahl der frei wählbaren Parameter notwendig ist.

Weiterhin kann es durch den aktuell ablaufenden Prozess bedingt sein, dass sich der ermittelte Füllstand in einem im Wesentlichen bekannten Maße oder zumindest in einer bekannten Richtung ändert. Ein Beispiel für diesen Fall ist in der Offenlegungsschrift DE 103 252 67 A1 beschrieben. In dem darin genannten Verfahren wird zusätzlich zur Füllstandsmessung die Befüll- oder Entleerungsrate erfasst und bei der Füllstandsmessung verwendet. Hierzu wird z.B. ein zusätzliches Durchflussmessgerät oder die Pumpleistung einer Pumpe o.ä. verwendet. In diesem Fall eignet sich die Kenntnis über den aktuell ablaufenden Prozess dazu, die Plausibilität des Nutzechosignals zu überprüfen und/oder um bestimmte Störechosignale im Vorhinein auszuschließen.

In all diesen Fällen ist es daher prinzipiell wünschenswert, unter Kenntnis des aktuell vorliegenden Prozesses eine Anpassung der Auswertung und/oder eine zusätzliche Plausibilisierung vorzunehmen. Im Stand der Technik findet die Auswertung der Echokurve im Füllstands-Messgerät selbst statt, wohingegen die Prozesssteuerung oftmals durch eine übergeordnete Steuerungseinheit gesteuert wird.

Damit liegt die Kenntnis über den aktuell vorliegenden Prozess zunächst nur in der übergeordneten Steuerungseinheit vor. Sollen in der übergeordneten Steuerungseinheit vorliegende Informationen bezüglich eines aktuell ablaufenden Prozesses von dem Füllstandsmessgerät berücksichtigt werden, muss eine Übermittelung und eine sich daran anschließende Weiterverarbeitung in dem Füllstands-Messgerät stattfinden.

Dies bringt allerdings zusätzliche Einschränkungen mit sich, beispielsweise in Hinblick auf die Auslegung einer dem Füllstands-Messgerät zugeordneten Regel-/Auswerteeinheit, wie etwa ein Microcontroller, oder die von dem Füllstands-Messgerät benötige Energie. Insbesondere die dem Füllstands-Messgerät maximal zuführbare Energie ist in vielen Fällen aufgrund von sicherheitsrelevanten Normen beschränkt, beispielsweise, wenn das Füllstands-Messgerät in explosionsgefährdeten Bereichen eingesetzt wird.

Der Erfindung liegt die Aufgabe zugrunde, ein Verfahren anzugeben, mit dem möglichst einfach der aktuell vorliegende Prozess bei der Auswertung der Echokurve berücksichtigt werden kann.

Die Aufgabe wird durch die Merkmale des unabhängigen Anspruchs gelöst.

Die erfindungsgemäße Lösung betrifft ein Verfahren zur Bestimmung und/oder Überwachung des Füllstands eines Füllguts in einem Behälter einer Prozessanlage mit einem nach dem Laufzeitprinzip arbeitenden Füllstandsmessgerät, das im Messbetrieb Sendesignale in Richtung des Füllguts in den Behälter aussendet und anhand im Behälter zurückreflektierter Signalanteile eine Echokurve ermittelt, die die Amplituden der zurückreflektierten Signalanteile als Funktion der Laufzeit wiedergibt.

Die Echokurve wird zu einer übergeordneten Steuerungseinheit der Prozessanlage übermittelt und/oder eine die Echokurve einhüllende Hüllkurve wird erstellt und zu der übergeordneten Steuerungseinheit der Prozessanlage übermittelt, wobei die Echokurve und/oder Hüllkurve von der übergeordneten Steuerungseinheit der Prozessanlage ausgewertet werden/wird, wobei bei der Auswertung der Echokurve und/oder Hüllkurve ein Nutzechosignal (S) der Echokurve und/oder Hüllkurve identifiziert wird, dessen Laufzeit bei der Ermittlung des aktuell vorliegenden Füllstands zugrunde gelegt wird, wobei während der Bestimmung und/oder Überwachung des Füllstands das Füllgut und/oder der Behälter zumindest einem aktuellen Prozess unterzogen werden/wird, wobei bekannte Informationen über den zumindest einen aktuellen Prozess in der übergeordneten Steuerungseinheit hinterlegt werden, und wobei anhand der Informationen über den aktuell vorliegenden Prozess die Plausibilität des Nutzechosignals überprüft wird und/oder die Auswertung, insbesondere die Identifikation des Nutzechosignals, an den jeweils aktuell vorliegenden Prozess dynamisch angepasst wird.

Nicht erfindungsgemäß, ist weiterhin ein Messsystem, umfassend zumindest das Füllstandsmessgerät und die übergeordnete Steuerungseinheit, wobei das Messsystem dazu ausgestaltet ist, das erfindungsgemäße Verfahren auszuführen.

Die übergeordnete Steuerungseinheit ist dabei insbesondere auch zur Steuerung der Prozessanlage ausgestaltet. In diesem Fall wird der zumindest eine Prozess, dem das Füllgut und/oder der Behälter unterzogen werden/wird, von der übergeordnete Steuerungseinheit gesteuert und/oder geregelt. Selbstverständlich kann es sich aber auch um eine weitere, übergeordnete Steuerungseinheit handeln, in welcher die Informationen bezüglich des aktuell ablaufenden Prozesses vorliegen.

Der Ausdruck "dynamische Anpassung" bezeichnet im Rahmen der Anmeldung, dass die Überprüfung der Plausibilität und/oder die Anpassung der Auswertung während des laufenden Messbetriebs und während des aktuell ablaufenden Prozesses erfolgt.

Mittels der Überprüfung der Plausibilität wird ab dem der übergeordneten Steuerungseinheit bekannten Zeitpunkt eines Auftreten eines bestimmten Prozesses die der Steuerungseinheit bekannte Information über den Prozess zur zusätzlichen Plausibilisierung des ermittelten Nutzechosignals herangezogen.

Mittels der Anpassung der Auswertung wird ab dem der übergeordneten Steuerungseinheit bekannten Zeitpunkt eines Auftreten eines bestimmten Prozesses die Auswertung angepasst. Tritt der Prozess, der eine bestimmte Anpassung der Auswertung erfordert, gegebenenfalls nur während eines bestimmten Zeitfensters auf, handelt es sich zum Beispiel um eine temporäre Anpassung der Auswertung.

Zudem kann in dem erfindungsgemäßen Verfahren auch gleichzeitig die Überprüfung der Plausibilität und die Anpassung der Auswertung erfolgen. Beispielsweise kann in dem Grenzfall, dass bei einer Auswertung zunächst zwei verschiedene potentielle Nutzechosignale identifiziert werden, die Auswertung derart angepasst werden, dass dasjenige der beiden potentiellen Nutzechosignale als das Nutzechosignal identifiziert wird, welches angesichts des aktuellen Prozesses die höhere Plausibilität aufweist.

Die Vorteile der Erfindung sind die folgenden:
- Die gesamte, in der übergeordneten Steuerungseinheit vorliegende Information bezüglich des aktuell ablaufenden Prozess steht bei der Auswertung der Echokurve und/oder Hüllkurve zur Verfügung. Die Auswertung der Echokurve und/oder Hüllkurve und die Bestimmung des Füllstands erfolgt erst in der übergeordneten Steuerungseinheit. Dadurch müssen die für eine derartige angepasste Auswertung benötigten Rechen- und/oder Speicherkapazitäten nicht in dem Füllstands-Messgerät selbst vorliegen, wodurch letztendlich der Energie- und/oder Platzbedarf des Füllstands-Messgeräts reduziert wird.
- Mittels des erfindungsgemäßen Verfahrens wird eine erhöhte Genauigkeit und/oder Verfügbarkeit erreicht. Die erhöhte Genauigkeit ist dadurch gegeben, dass die Auswertung auf den jeweils aktuell vorliegenden Prozess abgestimmt ist. Die erhöhte Verfügbarkeit ist dadurch gegeben, dass eine Auswertung nun auch in Grenzfällen möglich ist, in welchen ohne eine derartige dynamische Anpassung ansonsten auch kein Nutzechosignal mehr identifiziert werden könnte.

In einer Ausgestaltung der Erfindung werden bei der Auswertung Störechosignale der Echokurve und/oder Hüllkurve identifiziert. Die Identifikation der Störechosignale wird an den jeweils aktuell vorliegenden Prozess angepasst.

In einer vorteilhaften Ausgestaltung der Erfindung erfolgt die Auswertung der Echokurve und/oder der Hüllkurve, insbesondere die Identifikation des Nutzechosignals und/oder der Störechosignale, mittels eines Auswertealgorithmus mit zumindest einen frei wählbaren Parameter. Durch den jeweils aktuell vorliegenden Prozess wird der zumindest eine frei wählbare Parameter festgelegt. Selbstverständlich können auch mehrere frei wählbare Parameter durch den jeweils aktuell vorliegenden Prozess festgelegt werden.

Derartige Parameter eines Auswertealgorithmus, die die Auswertung der Echokurve und/oder der Hüllkurve, insbesondere die Identifikation des Nutzechosignals und/oder des Störechosignals beeinflussen, können zum Beispiel folgendes sein:
- Parameter, die bei der Erstellung der die Echokurve einhüllenden Hüllkurve verwendet werden
- Parameter der eingangs genannten Glättungsverfahren, durch welche Störechosignale aus der Hüllkurve herausgemittelt werden. Durch die Hüllkurvenglättung werden Rauschanteile im Signalverlauf einer einzelnen Hüllkurve herausgemittelt, indem beispielsweise Ausreißer bei einzelnen, zu einer Laufzeit gehörenden Abtastpunkte in ihrer Amplitude der Umgebung angenähert werden. Ein Parameter bei der Glättungsverfahren ist eine Zeitkonstante, welche z.B. an die Änderungsrate des aktuell vorliegenden Prozesses angepasst wird.

- Parameter, die bei einer zeitlichen Mittelung wiederkehrend aufgenommener Echokurven und/oder Hüllkurven eingesetzt werden. Ist insbesondere bekannt, dass ein bestimmter Prozess oder der Wechsel von einem erstem Prozess zu einem zweiten Prozess eine starke Auswirkung auf die Hüllkurve und/oder Echokurve aufweist, so ist es z.B. sinnvoll, keine zeitliche Mittelung von in den verschiedenen Prozessen aufgenommenen Hüllkurven und/oder Echokurven vorzunehmen.
- Parameter der eingangs erwähnten dynamischen Echoverfolgung. Hierbei kann genau wie im vorherigen Fall in Grenzfällen die Information bezüglich des aktuellen Prozesses gleichzeitig zur Identifikation bzw. Plausibilisierung des Nutzechosignals genutzt werden. Ein für die Echoverfolgung kritischer Grenzfall ist beispielsweise der oben erwähnte Fall eines im Bereich des Nutzechosignals liegenden Störechosignals und/oder ein Störechosignal mit etwa gleich großer Amplitude wie das Nutzechosignal.
- Parameter der eingangs erwähnten Ausblendkurve zur Ausblendung der Störechosignale. Hierzu zählen insbesondere Parameter, mittels derer bestimmte Bereiche der Echokurve und/oder Hüllkurve (d.h. gewisse Laufzeiten bzw. Füllstände) aus einem z.B. statischen Echosuchalgorithmus zur Identifikation von Echosignalen ausgenommen werden. Ein Beispiel dafür ist die sogenannte Blockdistanz, welche einen Bereich in der Nähe des Füllstandsmessgeräts beschreibt, in welchem keine Echosignale detektiert bzw. ausgewertet werden.
- Parameter, die einen Schwellwert für die Amplitude zur Identifikation von Echosignalen aus der Echokurve in einem statischen Echosuchalgorithmus festlegen.
- Parameter einer Bewertungskurve der Echokurve und/oder Hüllkurve. Ein wichtiger Parameter ist hier ein sogenannter Bewertungsoffset, durch die Empfindlichkeit der Bewertungskurve eingestellt wird. Ein aktuell auftretender Prozess kann zu einem Grenzfall führen, bei dem temporär eine Erhöhung der Empfindlichkeit erforderlich ist. Beispiele hierfür sind plötzliche Schaumbildung und/oder sich plötzlich ändernde Reflexionseigenschaften der Oberfläche des Füllguts. In diesem Fall wird mit dem erfindungsgemäßen Verfahren die erhöhte Verfügbarkeit erreicht, da ansonsten bei einem gleichbleibenden Bewertungsoffset ein Verlust des verfolgten Echosignals drohen würde.
- Parameter eines Tankboden-Erkennungs-Algorithmus. Durch einen Tankboden-Erkennungs-Algorithmus werden durch Reflexionen am Tankboden verursachte Störechosignale identifiziert, welche - je nach Füllgut- eine sehr große Echosignalamplitude haben können. Parameter dieses Algorithmus hängen insbesondere von der Dielektrizitätskonstante des Füllguts ab, so dass die Tankboden-Erkennung für eine bestimmte, festgelegte Dielektrizitätskonstante optimiert ist. Ändert sich die Dielektrizitätskonstante prozessbedingt, beispielsweise durch Zumischen oder Abdestillieren von Medien, ermöglicht hier eine Anpassung dieses Parameters eine verbesserte Identifikation des Störechosignals. Eine auf eine festgelegte Dielektrizitätskonstanten hin optimierte Tankboden-Erkennung liefe ansonsten Gefahr, falsche Messwerte für den Füllstand zu ermitteln.
- Parameter, die einen kritischen Wert für ein akzeptables Signal-/Rauschverhältnis festlegen. Durch einen derartigen kritischen Wert wird z.B. überprüft, dass die Echosignalamplitude des identifizierten Nutzechosignals im Verhältnis zu der Echosignalamplitude jedes identifizierten Störechosignals größer als der kritische Wert ist. Zusätzlich kann in Grenzfällen, etwa im Falle etwa gleich großer Echosignalamplituden des Nutzechosignals und einem Störechosignal die Information bezüglich des aktuellen Prozesses gleichzeitig zur Identifikation bzw. Plausibilisierung des Nutzechosignals genutzt werden.
- Parameter, die einen kritischen Wert festlegen, der bei einer Überprüfung der ordnungsgemäßen Funktion des Füllstandsmessgeräts verwendet werden. Hierbei sei insbesondere auf das in der DE 10 2005 00 31 52 A1 offenbarte Verfahren verwiesen, in welchem z.B. für ein identifiziertes Störechosignal anhand des Nutzechosignals und einer prozessabhängigen Idealechokurve ein zu erwartendes Nutzechosignal am Ort des Störechosignals bestimmt wird. Anschließend wird mittels eines kritischen Werts überprüft, dass das zu erwartende Nutzechosignal am Ort des Störechosignals im Verhältnis zu jedem Störechosignal größer als der kritische Wert ist.

Die hier aufgelisteten Beispiele sind keineswegs beschränkend für die Erfindung, selbstverständlich können auch weitere aus dem Stand der Technik bekannte Parameter zur Auswertung der Echokurve und/oder der Hüllkurve dynamisch angepasst werden.

In einer bevorzugten Weiterbildung der Erfindung werden/wird in einem vom Messbetrieb verschiedenen Initialisierungsbetrieb, vorzugsweise im Rahmen einer Inbetriebnahme des Füllstandsmessgeräts, das Füllgut und/oder der Behälter zumindest einem im Messbetrieb auftretenden Prozess unterzogen. Das Füllstandsmessgerät sendet im Initialisierungsbetrieb Sendesignale in Richtung des Füllguts in den Behälter aus und ermittelt anhand im Behälter zurückreflektierter Signalanteile eine Echokurve, wobei die Echokurve zu einer übergeordneten Steuerungseinheit der Prozessanlage übermittelt wird und/oder eine die Echokurve einhüllende Hüllkurve erstellt und zu der übergeordneten Steuerungseinheit übermittelt wird. Einflüsse des aktuellen Prozesses auf die Echokurve und/oder die Hüllkurve werden von der übergeordneten Steuerungseinheit erfasst. Aus den Einflüssen wird zumindest eine Vorschrift zur Anpassung der Auswertung, insbesondere zur Anpassung der Identifikation des Nutzechosignals und/oder der Störechosignale bestimmt und in der übergeordneten Steuerungseinheit hinterlegt. Vorzugsweise ist die Vorschrift zur Anpassung der Auswertung eine Auswahl des zumindest einen frei wählbaren Parameters. Im Messbetrieb wird dann die im Initialisierungsbetrieb hinterlegte Vorschrift, vorzugsweise der zumindest eine frei wählbare Parameter, bei der dynamischen Anpassung der Auswertung, an den jeweils aktuell vorliegenden Prozess verwendet, insbesondere bei der dynamischen Anpassung der Identifikation des Nutzechosignals.

In dieser Weiterbildung der Erfindung werden/wird also Initialisierungsbetrieb einer oder mehrere derjenigen Prozesse, dem das Füllgut und/oder der Behälter auch im Messbetrieb unterzogen werden/wird, durchgefahren. Die Änderung der Echokurve und/oder Hüllkurve in Reaktion auf einen bestimmten Prozess, welcher im Initialisierungsbetrieb testweise durchgefahren wird, wird von der übergeordneten Steuerungseinheit erfasst. Dabei liegt - je nach Prozess -beispielsweise ein konstanter und ggf. bekannter oder nicht-konstanter und ggf. anfänglich bekannter Füllstand des Füllguts in dem Behälter vor.

Anhand der Änderung der Echokurve und/oder Hüllkurve in Reaktion auf den Prozess wird die zumindest eine Vorschrift zu einer angepassten Auswertung der Echokurve und/oder Hüllkurve erstellt. Beispielsweise kann sich zeigen, dass ein bestimmter Prozess, der während des Messbetriebs in einem bestimmten Zeitfenster durchgefahren wird, eine Anpassung der Parameter während dieses Zeitfensters erfordert.

Insbesondere kann während des zu einem jeweiligen Prozess gehörenden Zeitfensters eine Anpassung einer oder mehrerer der eingangs genannten Parameter wie Parameter für Ausblendkurven, Schwellwerte und/oder Grenzwerte für Signal/Rauschverhältnisse usw. erforderlich sein.

Selbstverständlich kann alternativ oder zusätzlich die übergeordnete Steuerungseinheit auch Erfahrungswerte verwenden, indem beispielsweise auf bereits gesammelte Erfahrungswerte mit ähnlichen Anlagen, Füllgütern und/oder Prozessen zurückgegriffen wird. Hierbei kann es sich zum Beispiel um hinterlegte Parameter ("bei Wechsel von Prozess A zu Prozess B -> Schwellwert auf den Wert X setzen") oder hinterlegte Vorschriften zur Anpassung der Parameter ("bei Wechsel von Prozess A zu Prozess B -> Schwellwert um 10% herabsenken") handeln. Diese Erfahrungswerte können beispielsweise in einer mit der übergeordneten Steuerungseinheit verbundenen Datenbank gespeichert sein. Die Datenbank kann z.B. auf einer Speichereinheit gespeichert sein aber, aber auch dezentral vorliegen, z.B. in einer Cloud.

In einer bevorzugten Ausgestaltung der Erfindung werden/wird die Echokurve und/oder die Hüllkurve zu der übergeordneten Steuerungseinheit über ein Kommunikationsnetzwerk, insbesondere über einen Feldbus der Automatisierungstechnik und/oder über Ethernet, drahtgebunden und/oder drahtlos übermittelt. Insbesondere handelt es sich um eine wiederkehrende Übermittelung. Hierbei kann es sich um eine zyklische oder akylkische wiederkehrende Übermittelung handeln.

Für den Fall, dass das Kommunikationsnetzwerk als ein drahtgebundenes Kommunikationsnetzwerk ausgestaltet ist, kann es sich zum Beispiel um einen drahtgebundenen Feldbus der Automatisierungstechnik, beispielsweise Foundation Fieldbus, Profibus PA, Profibus DP, HART, CANBus, etc. handeln. Es kann aber auch um ein modernes industrielles Kommunikationsnetzwerk, beispielsweise um einen "Industrial Ethernet"-Feldbus, insbesondere Profinet, HART-IP oder Ethernet/IP oder um ein aus dem Kommunikationsbereich bekanntes Kommunikationsnetzwerk, beispielsweise Ethernet nach dem TCP/IP-Protokoll, handeln.

Für den Fall, dass das Kommunikationsnetzwerk als ein drahtloses Kommunikationsnetzwerk ausgestaltet ist, kann es sich zum Beispiel um ein Bluetooth, ZigBee-, WLAN-, GSM-, LTE-, UMTS-Kommunikationsnetzwerk oder aber auch eine drahtlose Version eines Feldbusses, insbesondere 802.15.4 basierte Standards wie WirelessHART handeln.

In einer Ausgestaltung der Erfindung werden/wird die Echokurve und/oder die Hüllkurve nur auf Anfrage der übergeordneten Steuerungseinheit zu der übergeordneten Steuerungseinheit übermittelt In dieser Ausgestaltung ist das Füllstands-Messgerät also als ein Slave-Messgerät ausgestaltet, welches nur auf Anfrage eines der übergeordneten Steuerungseinheit zugeordneten Masters die Messdaten übermittelt.

In einer dazu alternativen Ausgestaltung der Erfindung werden/wird die Echokurve und/oder die Hüllkurve von dem Füllstands-Messgerät selbstständig und/oder auf Anfrage der übergeordneten Steuerungseinheit zu der übergeordneten Steuerungseinheit übermittelt werden/wird.

In einer bevorzugten Weiterbildung der Erfindung werden/wird ein aus der Echokurve und/oder der Hüllkurve ermittelter Füllstand und/oder Statusinformationen, insbesondere Diagnose- und/oder Informationen über den aktuell vorliegenden Prozess, mittels des Kommunikationsnetzwerks von der übergeordneten Steuerungseinheit zu zumindest einer Anzeigeeinheit übermittelt und von der Anzeigeeinheit angezeigt. In diesem Fall handelt es sich also um mehrdirektionales, also zum Beispiel ein bidirektionales Kommunikationsnetzwerk.

In dieser bevorzugten Weiterbildung der Erfindung kann an der Anzeigeeinheit nicht nur der Füllstand selbst angezeigt werden, sondern auch, in welchem Maße der aktuell ablaufende Prozess die Echokurve beeinflusst, also z.B. "Auswerte-Parameter im Wesentlichen unverändert", "Auswerte-Parameter aufgrund des Prozesses stark verändert", "Ermittelte Plausibilität des Füllstands aufgrund des Prozesses hoch/niedrig", "Warnung: bei aktuell ablaufendem Prozess keine verlässliche Ermittlung des Füllstands möglich".

In einer Ausgestaltung der Erfindung ist eine Anzeigeeinheit am Feldgerät angeordnet.

In einer dazu alternativen Ausgestaltung der Erfindung ist zumindest eine Anzeigeeinheit außerhalb der Prozessanlage angeordnet, und/oder die zumindest eine Anzeigeeinheit ist Teil eines mobilen Endgeräts.

Die außerhalb der Prozessanlage angeordnete Anzeigeeinheit kann zum Beispiel Teil eines von der Prozessanalage entfernt angeordneten Computers sein. Die außerhalb der Prozessanlage angeordnete Anzeigeeinheit kann z.B. auch Teil einer von der Prozessanalage entfernt angeordneten, weiteren übergeordneten Steuerungseinheit sein.

Bei dem mobilen Endgerät kann es sich um ein Smartphone, ein Tablet, eine Datenbrille, oder ein für die Prozessautomatisierung spezifisches mobiles Endgerät wie der von Endress+Hauser vertriebene FieldXpert handeln.

In einer weiteren Weiterbildung der Erfindung werden wiederkehrend mehrere Echokurven und/oder Hüllkurven ermittelt, zu der übergeordneten Steuerungseinheit übertragen und in der übergeordneten Steuerungseinheit und/oder einer damit verbundenen Speichereinheit gespeichert. Von der übergeordneten Steuerungseinheit werden/wird bei der Auswertung einer aktuell ermittelten Echokurve und/oder Hüllkurve eine zuvor ermittelte Echokurve und/oder Hüllkurve herangezogen. In dieser Weiterbildung wird also die Historie der Echokurve und/oder Hüllkurve in Kombination mit dem aktuell ablaufenden Prozess verknüpft. Wird zum Beispiel ein initial bekannter Füllstand vorgegeben, so ermöglicht die Historie die im Stand der Technik bekannte und vorstehend erwähnte Echoverfolgung.

In einer Ausgestaltung der Erfindung werden/wird aufgrund des jeweils aktuell vorliegenden Prozesses die aktuell ermittelte Echokurve und/oder Hüllkurve verworfen und das Nutzechosignal einer zuvor ermittelten Echokurve und/oder Hüllkurve zur Bestimmung und/oder Überwachung des Füllstands verwendet. In dieser Ausgestaltung wird also auf eine zuvor ermittelte Echokurve und/oder Hüllkurve zurückgegriffen. Dieser Fall kann auftreten, wenn aufgrund des aktuellen Prozesses anzunehmen ist, z.B. aufgrund der Erfahrungen im Initialisierungsbetrieb, dass während des aktuellen ablaufenden Prozesses keine verlässliche Bestimmung und/oder Überwachung des Füllstands möglich ist.

In einer Ausgestaltung der Erfindung umfasst der aktuelle Prozess die Steuerung von an Zu- und/oder Abflüssen des Behälters angeordneter Aktoren, insbesondere Ventile und/oder Pumpen. Insbesondere wird die Plausibilität des identifizierten Nutzechosignals anhand des aktuell vorliegenden Zustands der Aktoren und anhand des Vergleichs der aktuell ermittelten Echokurve und/oder Hüllkurve mit einer zuvor ermittelten Echokurve und/oder Hüllkurve überprüft.

Selbstverständlich kann zusätzlich oder alternativ zu der Überprüfung der Plausibilität auch die der Auswertung Echokurve und/oder Hüllkurve angepasst werden. Ein veränderter Zustand der Aktoren kann das Füllgut, insbesondere die Oberfläche des Fülllguts durch Bewegung verändern, z.B. zu Turbulenzen an Oberfläche oder den Schaum. Wie eingangs bereits erwähnt, führt dies zu einer Erhöhung der Anzahl und/oder einer Verstärkung der Echosignalamplitude der Störechosignale. Dadurch erfordert z.B. vermehrt auftretender Schaum eine angepasste Auswertung der Echokurve und/oder Hüllkurve, insbesondere etwa derjenigen Parameter, welche die Identifikation der Störechosignale in einem Auswertealgorithmus beeinflussen.

Eine weitere, durch Bewegung bedingte Veränderung des Füllguts kann auch vorliegen, wenn Einbauten in dem Behälter bewegt werden. In einer weiteren Ausgestaltung der Erfindung umfasst der aktuelle Prozess daher ein Einbringen von Einbauten in den Behälter und/oder ein Bewegen von Einbauten in dem Behälter. Insbesondere umfasst der Prozess ein Rühren mit einem im Behälter befindlichen Rührwerk und/oder eine Änderung einer Drehzahl eines Rührens mit einem im Behälter befindlichen Rührwerk.

Werden ferner Einbauten wie Leitern in einem der Füllstandsmessgerät zugewandten Endbereich des Behälters eingebracht und/oder bewegt, kann es zum Beispiel erforderlich sein, dass eine veränderte eingangs genannte Ausblendkurve bzw. Blockdistanz bei der Auswertung der Echokurve und/oder Hüllkurve verwendet wird.

In einer weiteren Ausgestaltung der Erfindung umfasst der aktuelle Prozess eine Zugabe und/oder ein Abdestillieren eines Mediums. Dadurch wird insbesondere die Dielektrizitätskonstante des Füllguts erhöht oder erniedrigt und/oder ein Anteil von Schaum im Füllgut erhöht oder erniedrigt werden.

Eine Änderung der Dielektrizitätskonstante kann beispielsweise eine Anpassung der eingangs erwähnten Schwellwerte erfordern, welche bei der Identifizierung der Echosignale aus der Echokurve und/oder Hüllkurve erfordern. Ist nun in der übergeordneten Steuerungseinheit zum Beispiel bekannt, dass ab einem bestimmten Zeitpunkt ein Medium zugegeben wird, aufgrund dessen Zugabe die Dielektrizitätskonstante erhöht oder erniedrigt, so werden/wird ab diesem Zeitpunkt die Echokurve und/oder Hüllkurve mit einem entsprechend angepassten Schwellwert ausgewertet.

In einer weiteren Ausgestaltung der Erfindung umfasst der aktuelle Prozess eine im Behälter stattfindende Reinigung des Behälters und/oder im Behälter angeordneter Einbauten. Eine derartige Vorort-Reinigung (englisch "Cleaning-in-Place" oder kurz: CIP) führt zum Beispiel unter Umständen dazu, dass eine verlässliche Auswertung der Echokurve und/oder Hüllkurve nicht möglich ist. In diesem Fall wird z.B. auf die oben erwähnten Historiendaten zurückgegriffen.

In einer weiteren Ausgestaltung der Erfindung handelt es sich bei dem Füllgut um Feststoffpartikel, wobei der aktuelle Prozess eine Fluidisierung des Füllguts umfasst. Bei der Fluidisierung wird eine sogenannte Wirbelschicht gebildet. Als Wirbelschicht wird eine Schüttung von Feststoffpartikeln bezeichnet, welche durch eine aufwärtsgerichtete Strömung eines Fluides in einen fluidisierten Zustand versetzt wird. Der Begriff "fluidisiert" weist darauf hin, dass das vormals als Schüttung vorliegende Füllgut nun Fluid-ähnliche Eigenschaften aufweist. Durch den Prozess der Fluidisierung weist das Füllgut ab einem der übergeordneten Steuerungseinheit bekannten Zeitpunkt plötzlich fluid-ähnliche Eigenschaften auf. Dies ändert die Reflexionseigenschaften der Oberfläche des Füllguts und kann damit einen maßgeblichen Einfluss auf die Echokurve und/oder Hüllkurve haben. Daher kann auch in diesem Fall eine Anpassung der Auswertung der Echokurve und/oder Hüllkurve erforderlich sein.

In einer weiteren Ausgestaltung ist der Behälter beweglich, wobei der Prozess ein Bewegen des beweglichen Behälters umfasst. Bei dem beweglichen Behälter handelt es sich um kippbare oder weitere während des Messbetriebs nicht dauerhaft statische Behälter, wie beispielsweise Wechselbehälter, Waggons, Loren usw..

In einer weiteren Ausgestaltung der Erfindung umfasst der aktuelle Prozess ein Heizen des Füllguts.

Es versteht sich von selbst, dass der im Messbetrieb aktuell auftretende Prozess auch eine Kombination der Prozesse umfassen kann, welche in verschiedenen Ausgestalteten der Erfindung genannt sind, also z.B. ein gleichzeitiges Rühren mit einem Rührwerk und die Zugabe eine Stoffes. Gegebenenfalls erfordert nur eine derartige Kombination zumindest zweier, prinzipiell unabhängiger Unterprozesse eine Anpassung der Auswertung der Echokurve und/oder Hüllkurve. Dies kann zum Beispiel der Fall sein, wenn erst bei einem Heizen des Füllguts in Kombination mit einem gleichzeitigen Rühren des Füllguts Schaum gebildet wird. In welchem Maße zumindest zwei prinzipiell unabhängige Unterprozesse nur in Kombination bzw. in ihrem Zusammenwirken eine Anpassung der Auswertung erfordern, kann z.B. auch im Initialisierungsbetrieb festgestellt werden.

Die Erfindung wird anhand der nachfolgenden, nicht maßstabsgetreuen Figuren näher erläutert, wobei gleiche Bezugszeichen gleiche Merkmale bezeichnen. Wenn es die Übersichtlichkeit erfordert oder es anderweitig sinnvoll erscheint, wird auf bereits erwähnte Bezugszeichen in nachfolgenden Figuren verzichtet. Es zeigt:
Fig. 1: Eine Seitenansicht einer zur Ausführung des erfindungsgemäßen Verfahrens ausgestalteten Vorrichtung;
Fig. 2: Eine Ausgestaltung des erfindungsgemäßen Verfahrens.

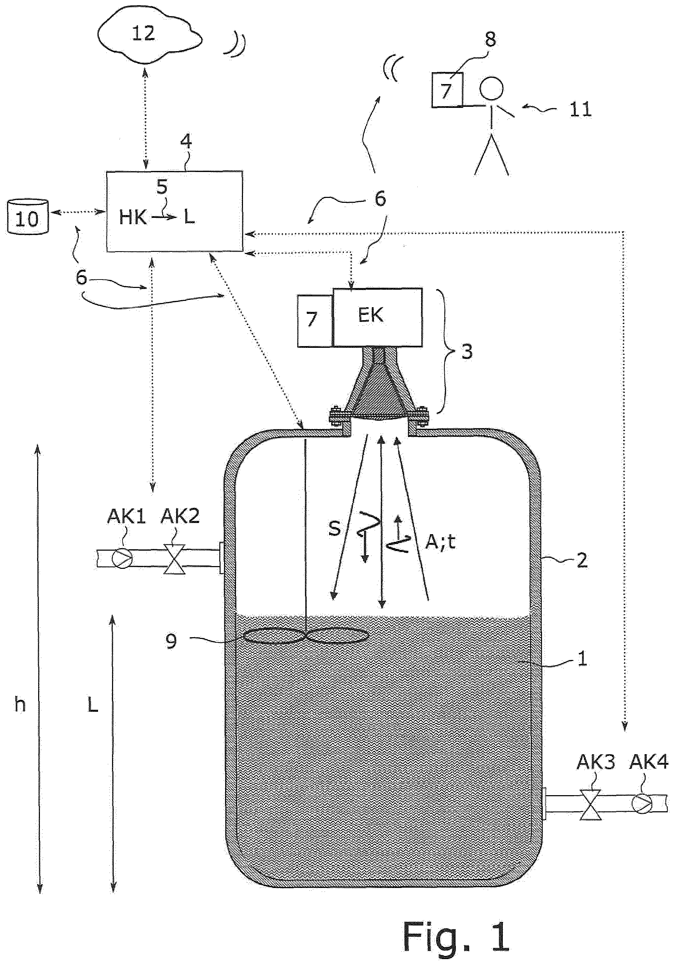

Fig. 1 zeigt eine typische Anordnung eines nach dem Laufzeit-Prinzip arbeitenden Füllstandsmessgeräts 3 an einem Behälter 2. In dem Behälter 2 befindet sich ein Füllgut 1, dessen Füllstand L durch das Füllstandsmessgerät 3 zu bestimmen ist. Hierzu ist das Füllstandsmessgerät 3 in einer vorbekannten Einbauhöhe h oberhalb des Füllgutes 3 am Behälter 2 angebracht. Hierbei kann der Behälter 2 je nach Anwendung bis mehr als 30m hoch sein. Das Füllstandsmessgerät 3 ist derart am Behälter 2 angeordnet, dass es Sendesignale S in Richtung des Füllguts 1 in den Behälter 2 aussendet und anhand im Behälter 2 zurückreflektierter Signalanteile eine Echokurve ermittelt, die die Amplituden A der zurückreflektierten Signalanteile als Funktion der Laufzeit t wiedergibt. Bei den Sendesignalen S bzw. reflektieren Signalen handelt es sich um elektromagnetische Wellen aus dem Radarbereich, d.h. das Füllstandsmessgerät 3 ist als ein Radar-Füllstandsmessgerät 3 ausgestaltet.

Bei Füllstandsmessgeräten nach dem Stand der Technik wird anhand der Amplituden A und der Laufzeiten t eine Echokurve EK erstellt und in der Echokurve ein Nutzechosignal NE identifiziert, welches der Reflexion des Sendesignals S an der Oberfläche des Füllguts 1 entspricht und dessen Laufzeit t von der Entfernung h-L des Füllstandsmessgeräts 3 zur Oberfläche des Füllguts 1 abhängt. Der Füllstand L wird dann auf Basis der gemessenen Laufzeit t des Nutzechosignals NE berechnet.

In dem erfindungsgemäßen Verfahren wird dabei in dem Füllstandsmessgerät 3 selbst zunächst die Echokurve EK erstellt. Das Füllstandsmessgerät 3 umfasst hierfür einen lokale Auswerteeinheit wie zum Beispiel einen Mikroprozessor und gegebenenfalls eine Speichereinheit. Gegebenenfalls wird zusätzlich in dem Füllstandsmessgerät 3 direkt eine die Echokurve EK einhüllende Hüllkurve HK erstellt. Das Füllstandsmessgerät 3 ist über das Kommunikationsnetzwerk 6 wie etwa einem Bussystem, z.B. "PROFIBUS", "HART" oder "Wireless HART" oder über ein anderes der vorstehend erwähnten Kommunikationsnetzwerke 6 mit einer übergeordneten Steuerungseinheit 4 verbunden. Bei der übergeordneten Steuerungseinheit 4 handelt es sich beispielsweise um ein Prozessleitsystem oder eine speicherprogrammierte Steuerungseinheit. Über das Kommunikationsnetzwerk 6 werden/wird die Echokurve EK und/oder die Hüllkurve HK an die übergeordneten Steuerungseinheit 4 übertragen.

In der übergeordneten Steuerungseinheit 4 findet eine Auswertung der Echokurve EK statt. Hierbei wird zum Beispiel die Hüllkurve HK erstellt und ausgewertet und dabei das Nutzechosignal NE der Hüllkurve HK identifiziert, welches der Reflexion des Sendesignals S an der Oberfläche des Füllguts 1 entspricht. Da dessen Laufzeit t von der Entfernung h-L des Füllstandsmessgeräts 3 zur Oberfläche des Füllguts 1 abhängt, wird der Füllstand L dann auf Basis der gemessenen Laufzeit t des Nutzechosignals NE bestimmt. Hierzu wird zumindest ein Parameter 5 verwendet.

Gemäß dem erfindungsgemäßen Verfahren wird das Füllgut 1 und/oder der Behälter 2 zumindest einem aktuellen Prozess P1, P2 unterzogen, der von der übergeordneten Steuerungseinheit 4 gesteuert und/oder geregelt wird. Die übergeordnete Steuerungseinheit 4 ist hierzu zum Beispiel zur Steuerung und/oder Regelung von an Zu- und/oder Abflüssen angeordneter Aktoren AK1,AK2,AK3,AK4 wie Ventile und Pumpen ausgestaltet. In den Behälter 2 sind zudem Einbauten 9 angeordnet, beispielsweise ein zum Rühren des Füllguts 1 ausgestaltetes Rührwerk. Bei dem Prozess P1, P2 werden also beispielsweise die Aktoren und/oder Einbauten von der übergeordneten Steuerungseinheit 4 in einer bestimmten Weise gesteuert und/oder geregelt, wobei die Aktoren AK1,AK2,AK3,AK4 und/oder Einbauten 9 auch über das Kommunikationsnetzwerk 6 mit der übergeordneten Steuerungseinheit 4 verbunden sind. Hierbei werden die je nach dem aktuellen Prozess P1;P2 aktuell vorliegenden Bedingungen und die dazu in der übergeordneten Steuerungseinheit 4 vorliegenden Informationen in Bezug auf das Füllgut 1 und/oder den Behälter 2 ausgenutzt. Diese können zum einen dazu verwendet werden, um die Plausibilität des ermittelten Nutzechosignals NE zu überprüfen und/oder die Auswertung, in Abhängigkeit von dem jeweils aktuell vorliegenden Prozess P1;.. dynamisch anzupassen.

Die Plausibilität des ermittelten Nutzechosignals NE wird zum Beispiel überprüft, falls unter Kenntnis des aktuell ablaufenden Prozesses eine Zu- oder Abnahme zu Füllstands L zu erwarten ist, beispielsweise aufgrund des Zustands von Ventilen, Pumpen und/oder einer gesteuerten Zugabe eines Mediums 13, welches das vom Füllgut 1 eingenommene Volumen in dem Behälter 2 und damit den Füllstand L beeinflusst.

Die dynamische Anpassung der Auswertung der Echokurve EK und/oder Hüllkurve HK erfolgt insbesondere dadurch, dass bei einer Änderung des Prozesses, beispielsweise P1 zu P2, der Algorithmus zur Identifikation des Nutzechosignals NE aus der Echokurve und/oder Hüllkurve entsprechend angepasst wird.

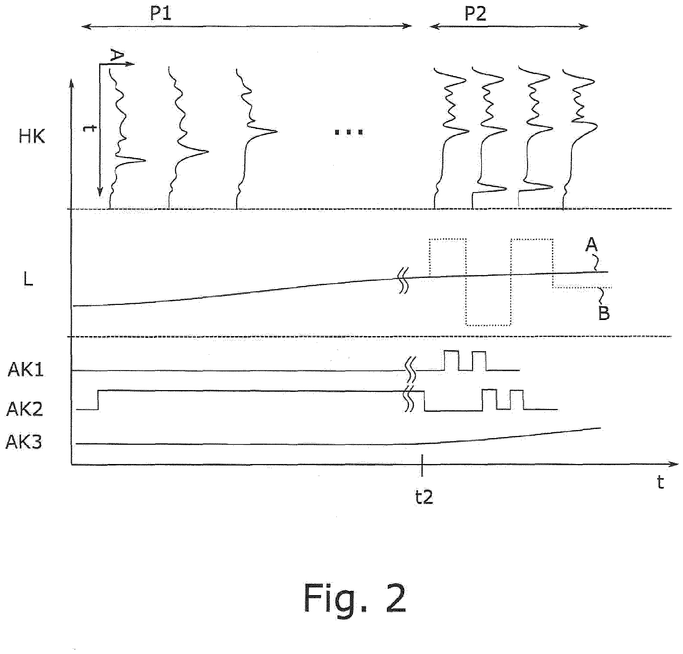

Dies ist in Fig. 2 an einem Beispiel näher dargestellt und wird im Folgenden näher erläutert, wobei sich selbstverständlich keinerlei Einschränkungen an die Erfindung durch das hier dargestellte Beispiel ergeben.

Fig. 2 zeigt, jeweils für zwei hintereinander ablaufende Prozesse P1 und P2, im obersten Feld den Verlauf wiederkehrend (beispielsweise in regelmäßigen Intervallen) aufgenommener Echokurve EK und Hüllkurve HK, also Amplitude/Laufzeit Funktionen, wobei der Übersichtlichkeit halber nur die Hüllkurve HK dargestellt ist.

Während des ersten Prozesses P1 wird dabei der im zweiten Feld dargestellte Füllstand L von der übergeordneten Einheit 4 ermittelt. Zudem ist der Zustand von drei Aktoren AK1 (Pumpe: an/aus), AK2 (Ventil: gesperrt/frei) und AK3 (Drehzahl des Rührwerks) dargestellt. Hierbei sind die Parameter zur Identifikation des Nutzechosignals NE an den Prozess P1 (hier: langsames Zufließen des Füllguts durch das offene Ventil und langsames Rühren mit einer konstanten Drehzahl) angepasst. Der aus der Laufzeit des Nutzechosignals NE mit den an den Prozess P1 angepassten Parametern ermittelte Füllstand L steigt kontinuierlich während des ersten Prozesses P1 mit einer ersten Prozessdauer an.

Zu einem Zeitpunkt t2 beginnt der zweite Prozess P2, umfassend das gleichzeitige zusätzliche Zuschalten von Pumpen und die Erhöhung der Drehzahl des Rührwerks. Ab einer gewissen Drehzahl werden z.B. Turbulenzen an der Oberflächen und/oder eine Trombus-förmige Oberfläche des Füllguts 1 erzeugt. Die Erhöhung der Drehzahl in Kombination mit dem Zustand der Aktoren AK1 ,AK2 beeinflusst das Füllgut 1 derart, dass zusätzliche Störechosignale SE in der Hüllkurve HK bei kürzeren Laufzeiten t, d.h. im oberen Bereich der Hüllkurve HK auftauchen.

Ohne eine entsprechende Anpassung der Auswertung in Bezug auf die Identifikation des Nutzechosignals NE und/oder der Störechosignale SE wäre keine zuverlässige Ermittlung des Füllstands L möglich; dies ist in der gepunkteten Linie B dargestellt. Wird dagegen erfindungsgemäß die Auswertung entsprechend angepasst, ist dadurch weiterhin eine zuverlässige Ermittlung des Füllstands L ermöglicht, (durchgezogene Linie A). In diesem Fall wird zum Beispiel die Ausblendkurve entsprechend angepasst, insbesondere für die Dauer des Prozesses P2. Hierdurch wird vorteilhaft die erhöhte Verfügbarkeit des Füllstands-Messgeräts in dem erfindungsgemäßen Verfahren erreicht.

Hierbei wurde die Kenntnis darüber, bei welchem Prozess P1, P2 welche Parameter bei der Auswertung der Hüllkurve HK wie anzupassen sind, in einem Initialisierungsbetrieb gewonnen. In diesem Fall wurde im Initialisierungsbetreib durch ein Durchfahren der Prozesse P1 und P2 beobachtet, dass ein gleichzeitige Rühren mit erhöhten Drehzahlen und ein Pumpen zu den Störechosignalen SE führt, welche z.B. mit einer angepassten Ausblendkurve entsprechend im späteren Messbetrieb entsprechend ausgeblendet werden können.

Selbstverständlich können derartige oder weitere Vorschriften zur Anpassung der Auswertung auch aus bereits gesammelten Erfahrungswerten mit anderen Prozessanlagen übernommen werden. Diese Erfahrungswerte können z.B. in einer Datenbank einer Cloud 12 (siehe Fig. 1) hinterlegt sein, die über das Kommunikationsnetzwerl 6 mit der übergeordneten Steuerungseinheit 4 verbunden sind, oder aber auch in Speichereinheit 10, wie beispielsweise einer lokalen Datenbank.

In der in Fig. 1 gezeigten Speichereinheit 10 und/oder der Cloud 12 können zudem auch historische Echokurven EK und/oder Hüllkurven HK abgelegt werden. Diese werden z.B. herangezogen, wenn der aktuell ablaufende Prozess P1;P2 eine zuverlässige Auswertung der Echokurve EK und/oder Hüllkurve HK unmöglich macht, beispielsweise bei einem CIP-Prozess. Dieser geht oftmals mit erhöhter Sprühteilchen- bzw. Nebelbildung einher, welche zu einer hohen Anzahl von Störechosignalen SE führt.

Besonders vorteilhaft ist es im Zusammenhang mit dem erfindungsgemäßen Verfahren, wenn die von der übergeordneten Einheit 4 aktuell ermittelten Messwerte für den Füllstand L, insbesondere auch gleichzeitig mit Informationen über den aktuell ablaufenden Prozesses P1;P2 an einer Anzeigeeinheit 7 angezeigt werden. Dies wird dadurch ermöglicht, dass die Auswertung der Echokurve EK in der übergeordneten Einheit 4 stattfindet und die übergeordnete Einheit 4 an die Cloud 12 bzw. das Kommunikationsnetzwerk 6 angebunden ist.

Die Anzeigeeinheit 7 kann dabei an dem Füllstandsmessgerät 3 selbst angeordnet sein. In einer weiteren vorteilhaften Ausgestaltung kann die Anzeigeeinheit wie in Fig. 1 dargestellt aber auch Teil eines mobilen Endgeräts 8 wie beispielsweise eines Smartphones sein, so dass der aktuelle Messwert für den Füllstand L einem Anwender 11 an einem beliebigen Ort innerhalb oder außerhalb der Prozessanlage angezeigt werden können.

### Bezugszeichen und Symbole

- 1: Füllgut
- 2: Behälter
- 3: Füllstandsmessgerät
- 4: übergeordnete Steuerungseinheit
- 5: frei wählbarer Parameter
- 6: Kommunikationsnetzwerk
- 7: Anzeigeeinheit
- 8: mobiles Endgerät
- 9: Einbauten
- 10: Speichereinheit
- 11: Anwender
- 12: Cloud
- 13: Medium
- L: Füllstand
- S: Sendesignale
- A: Amplituden
- t: Laufzeit
- h: Einbauhöhe
- Pz: Prozess
- EK: Echokurve
- HK: Hüllkurve
- NE: Nutzechosignal
- SE: Störechosignale
- P1,P2,...: Prozess
- AK, AK2,...: Aktoren
- h: Einbauhöhe

## Patentansprüche

1. Verfahren zur Bestimmung und/oder Überwachung des Füllstands (L) eines Füllguts (1) in einem Behälter (2) einer Prozessanlage mit einem nach dem Laufzeitprinzip arbeitenden Füllstandsmessgerät (3), das im Messbetrieb (MB) Sendesignale (S) in Richtung des Füllguts (1) in den Behälter (2) aussendet und anhand im Behälter (2) zurückreflektierter Signalanteile eine Echokurve (EK) ermittelt, die die Amplituden (A) der zurückreflektierten Signalanteile als Funktion der Laufzeit (t) wiedergibt,
wobei die Echokurve (EK) zu einer übergeordneten Steuerungseinheit (4) der Prozessanlage übermittelt wird und/oder eine die Echokurve (EK) einhüllende Hüllkurve (HK) erstellt und zu einer übergeordneten Steuerungseinheit (4) der Prozessanlage übermittelt wird, wobei die Echokurve (EK) und/oder Hüllkurve (HK) von der übergeordneten Steuerungseinheit (4) ausgewertet werden/wird, und der Füllstand in der übergeordneten Steuerungseinheit bestimmt wird, wobei bei der Auswertung der Echokurve (EK) und/oder Hüllkurve (HK) ein Nutzechosignal (NE) der Echokurve (EK) und/oder Hüllkurve (HK) identifiziert wird, dessen Laufzeit (t) bei der Ermittlung des aktuell vorliegenden Füllstands (L) zugrunde gelegt wird,
wobei während der Bestimmung und/oder Überwachung des Füllstands (L) das Füllgut (1) und/oder der Behälter (2) zumindest einem aktuellen Prozess (P1,..) unterzogen werden/wird,
wobei bekannte Informationen über den zumindest einen aktuellen Prozess (P1,..) in der übergeordneten Steuerungseinheit (4) hinterlegt werden,
und wobei anhand der Informationen über den aktuell vorliegenden Prozess (P1;..) die Plausibilität des Nutzechosignals (NE) überprüft wird und die Auswertung, insbesondere die Identifikation des Nutzechosignals (NE), an den jeweils aktuell vorliegenden Prozess (P1;..) dynamisch angepasst wird.

2. Verfahren nach Anspruch 1,
wobei bei der Auswertung Störechosignale (SE) der Echokurve (EK) und/oder Hüllkurve (HK) identifiziert werden,
und wobei die Identifikation der Störechosignale (SE) an den jeweils aktuell vorliegenden Prozess (P1,..) angepasst wird.

3. Verfahren nach zumindest einem der vorherigen Ansprüche,
wobei die Auswertung der Echokurve(EK) und/oder der Hüllkurve (HK), insbesondere die Identifikation des Nutzechosignals (NE) und/oder der Störechosignale (SE), mittels eines Auswertealgorithmus mit zumindest einen frei wählbaren Parameter (5,..) erfolgt,
und wobei durch den jeweils aktuell vorliegenden Prozess (P1,..) der zumindest eine frei wählbare Parameter (5,..) festgelegt wird.

4. Verfahren nach zumindest einem der vorherigen Ansprüche,
wobei in einem vom Messbetrieb verschiedenen Initialisierungsbetrieb, vorzugsweise im Rahmen einer Inbetriebnahme des Füllstandsmessgeräts (3), das Füllgut (1) und/oder der Behälter (2) zumindest einem im Messbetrieb auftretenden Prozess (P1;..) unterzogen werden/wird,
wobei das Füllstandsmessgerät (3) im Initialisierungsbetrieb Sendesignale (S) in Richtung des Füllguts (1) in den Behälter (2) aussendet und anhand im Behälter (2) zurückreflektierter Signalanteile eine Echokurve (EK) ermittelt,
wobei die Echokurve (EK) zu einer übergeordneten Steuerungseinheit (4) der Prozessanlage übermittelt wird und/oder eine die Echokurve (EK) einhüllende Hüllkurve (HK) erstellt und zu der übergeordneten Steuerungseinheit (4) übermittelt wird,
wobei Einflüsse des aktuellen Prozesses (P1;..) auf die Echokurve (EK) und/oder die Hüllkurve (HK) von der übergeordneten Steuerungseinheit (4) erfasst werden und aus den Einflüssen zumindest eine Vorschrift zur Anpassung der Auswertung, insbesondere zur Anpassung der Identifikation des Nutzechosignals (NE) und/oder der Störechosignale (SE), vorzugsweise eine Auswahl des zumindest einen frei wählbaren Parameters (5,..), bestimmt und in der übergeordneten Steuerungseinheit (4) hinterlegt wird,
und wobei im Messbetrieb die im Initialisierungsbetrieb hinterlegte Vorschrift, vorzugsweise der zumindest eine frei wählbare Parameter (5,..) bei der dynamischen Anpassung der Auswertung, insbesondere bei der dynamischen Anpassung der Identifikation des Nutzechosignals (NE) und/oder der Störechosignale (SE), an den jeweils aktuell vorliegenden Prozess (P1;..) verwendet wird.

5. Verfahren nach zumindest einem der vorherigen Ansprüche,
wobei die Echokurve (EK) und/oder die Hüllkurve (HK) zu der übergeordneten Steuerungseinheit (4) über ein Kommunikationsnetzwerk (6), insbesondere über einen Feldbus der Automatisierungstechnik und/oder über Ethernet, drahtgebunden und/oder drahtlos übermittelt werden/wird, insbesondere wiederkehrend,
selbstständig und/oder auf Anfrage der übergeordneten Steuerungseinheit (4).

6. Verfahren nach zumindest einem der vorherigen Ansprüche,
wobei ein aus der Echokurve (EK) und/oder der Hüllkurve (HK) ermittelter Füllstand (L) und/oder Statusinformationen, insbesondere Diagnose- und/oder Informationen über den aktuell vorliegenden Prozess (P1;...), mittels des Kommunikationsnetzwerks (6) von der übergeordneten Steuerungseinheit (4) zu zumindest einer Anzeigeeinheit (7) übermittelt werden/wird und von der Anzeigeeinheit (7) angezeigt werden/wird.

7. Verfahren nach zumindest einem der vorherigen Ansprüche,
wobei die zumindest eine Anzeigeeinheit (7) am Füllstandsmessgerät (3) angeordnet ist.

8. Verfahren nach zumindest einem der Ansprüchen 1 bis 6
wobei die zumindest eine Anzeigeeinheit (7) außerhalb der Prozessanlage angeordnet ist,
und/oder
wobei die zumindest eine Anzeigeeinheit (7) Teil eines mobilen Endgeräts (8), insbesondere eines Laptops, Tablets, Smartphones und/oder einer Datenbrille, ist.

9. Verfahren nach zumindest einem der vorherigen Ansprüchen,
wobei wiederkehrend mehrere Echokurven (EK,...) und/oder Hüllkurven (HK,...) ermittelt, zu der übergeordneten Steuerungseinheit (4) übertragen und in der übergeordneten Steuerungseinheit (4) und/oder einer damit verbundenen Speichereinheit (10) gespeichert werden,
und wobei von der übergeordneten Steuerungseinheit (4) bei der Auswertung einer aktuell ermittelten Echokurve (EK) und/oder Hüllkurve (HK) eine zuvor ermittelte Echokurve (EK) und/oder Hüllkurve (HK) herangezogen werden/wird.

10. Verfahren nach zumindest einem der vorherigen Ansprüchen,
wobei aufgrund des jeweils aktuell vorliegenden Prozesses (P1;...) die aktuell ermittelte Echokurve (EK) und/oder Hüllkurve (HK) verworfen und das Nutzechosignal (NE) einer zuvor ermittelten Echokurve (EK) und/oder Hüllkurve (HK) zur Bestimmung und/oder Überwachung des Füllstands (L) verwendet werden/wird.

11. Verfahren nach zumindest einem der vorherigen Ansprüchen,
wobei der aktuelle Prozess (P1;...) die Steuerung von an Zu- und/oder Abflüssen des Behälters (2) angeordneter Aktoren (AK1, AK2,...), insbesondere Ventile und/oder Pumpen, umfasst,
und wobei insbesondere die Plausibilität des identifizierten Nutzechosignals (NE) anhand des aktuell vorliegenden Zustands der Aktoren (AK1, AK2,...) und anhand des Vergleichs der aktuell ermittelten Echokurve (EK) und/oder Hüllkurve (HK) mit einer zuvor ermittelten Echokurve (EK) und/oder Hüllkurve (HK) überprüft wird.

12. Verfahren nach zumindest einem der vorherigen Ansprüchen,
wobei der aktuelle Prozess (P1;...) ein Einbringen von Einbauten (9) in den Behälter (2) und/oder ein Bewegen von Einbauten (9) in dem Behälter (2),
insbesondere ein Rühren mit einem im Behälter (2) befindlichen Rührwerk und/oder eine Änderung einer Drehzahl eines Rührens mit einem im Behälter (2) befindlichen Rührwerk, umfasst
und/oder wobei der aktuelle Prozess (P1;...) eine im Behälter (2) stattfindende Reinigung des Behälters (2) und/oder im Behälter (2) angeordneter Einbauten (9) umfasst.

13. Verfahren nach zumindest einem der vorherigen Ansprüchen,
wobei der aktuelle Prozess (P1;...) eine Zugabe und/oder ein Abdestillieren zumindest eines Mediums (13) umfasst, durch welche insbesondere die Dielektrizitätskonstante des Füllguts (1) erhöht oder erniedrigt wird und/oder durch welche ein Anteil von Schaum im Füllgut (1) erhöht oder erniedrigt wird.

14. Verfahren nach zumindest einem der vorherigen Ansprüchen,
wobei es sich bei dem Füllgut (1) um Feststoffpartikel handelt,
und wobei der aktuelle Prozess (P1;...) eine Fluidisierung des Füllguts (1) umfasst.

15. Verfahren nach zumindest einem der vorherigen Ansprüchen,
wobei der Behälter (2) beweglich ist, und wobei der aktuelle Prozess (P1;...) um ein Bewegen des beweglichen Behälters (2) umfasst und/oder
wobei der aktuelle Prozess (P1;...) ein Heizen des Füllguts (1) und/oder des Behälters (2) umfasst.

## Claims

1. Method to determine and/or monitor the level (L) of a medium (1) in a vessel (2) of a process system with a level transmitter (3) that operates according to the transit time principle, wherein, in the measuring mode (MB), said transmitter emits transmission signals (S) to the vessel (2) in the direction of the medium (1) and, on the basis of signal parts reflected in the vessel (2), determines an echo curve (EK) which represents the amplitudes (A) of the reflected signal parts as a function on the transit time (t), wherein the echo curve (EK) is transmitted to a master control unit (4) of the process system, and/or an envelope curve (HK) enveloping the echo curve (EK) is created and is transmitted to a master control unit (4) of the process system, wherein the echo curve (EK) and/or the envelope curve (HK) is/are evaluated by the master control unit (4), and the level is determined in the master control unit, wherein, during the evaluation of the echo curve (EK) and/or the envelope curve (HK), a useful echo signal (NE) of the echo curve (EK) and/or envelope curve (HK) is identified whose transit time (t) serves as the basis for determining the level (L) currently present,
wherein the medium (1) and/or the vessel (2) is/are subjected to at least one current process (P1, ...) during the determination and/or monitoring of the level (L),
wherein known information about the at least one current process (P1, ...) is saved in the master control unit (4),
and wherein the plausibility of the useful echo signal (NE) is checked on the basis of the information about the current process (P1, ...) and the evaluation, particularly the identification of the useful echo signal (NE), is dynamically adapted to the respective current process (P1, ...).

2. Procedure as claimed in Claim 1,
wherein interference echo signals (SE) of the echo curve (EK) and/or of the envelope curve (HK) are identified in the evaluation,
and wherein the identification of the interference echo signals (SE) is adapted to the respective current process (P1, ...).

3. Procedure as claimed in at least one of the previous claims,
wherein the evaluation of the echo curve (EK) and/or of the envelope curve (HK), particularly the identification of the useful echo signal (NE) and/or of the interference echo signals (SE), is performed using an evaluation algorithm with at least one freely selectable parameter (5, ...),
and wherein the at least one freely selectable parameter (5, ...) is determined by the respective current process (P1, ...).

4. Procedure as claimed in at least one of the previous claims,
wherein, in an initialization mode which is different to the measuring mode, preferably within the context of commissioning the level transmitter (3), the medium (1) and/or the vessel (2) is/are subjected to at least a process (P1, ...) that occurs in the measuring mode,
wherein, in the initialization mode, the level transmitter (3) emits transmission signals (S) to the vessel (2) in the direction of the medium (1) and determines an echo curve (EK) on the basis of the reflected signal parts in the vessel (2), wherein the echo curve (EK) is sent to a master control unit (4) of the process system and/or an envelope curve (HK) enveloping the echo curve (EK) is created and transmitted to the master control unit (4),
wherein influences of the current process (P1, ...) on the echo curve (EK) and/or the envelope curve (HK) are measured by the master control unit (4) and at least a rule for adapting the evaluation - particularly for adapting the identification of the useful echo signal (NE) and/or the interference echo signals (SE), preferably a selection of the at least one freely selectable parameter (5, ...) - is determined and saved in the master control unit (4),
and wherein, in the measuring mode, the rule saved in the initialization mode, preferably the at least one freely selectable parameter (5, ...), is used for the dynamic adaptation of the evaluation - particularly for the dynamic adaptation of the identification of the useful echo signal (NE) and/or of the interference echo signals (SE) - to the respective current process (P1, ...).

5. Procedure as claimed in at least one of the previous claims,
wherein the echo curve (EK) and/or the envelope curve (HK) is/are transmitted to the master control unit (4) via a communication network (6), particularly via a fieldbus used in automation engineering and/or via Ethernet, in a wired and/or wireless manner, particularly in a recurrent manner, independently and/or at the request of the master control unit (4).

6. Procedure as claimed in at least one of the previous claims,
wherein a level (L), determined from the echo curve (EK) and/or the envelope curve (HK), and/or status information, particularly diagnostic information and/or information about the current process (P1, ...), is/are transmitted - by means of the communication network (6) - from the master control unit (4) to the at least one display unit (7) and is/are displayed by the display unit (7).

7. Procedure as claimed in at least one of the previous claims,
wherein the at least one display unit (7) is arranged on the level transmitter (3).

8. Procedure as claimed in at least one of the Claims 1 to 6,
wherein the at least one display unit (7) is arranged outside the process system, and/or
wherein the at least one display unit (7) is part of a mobile terminal (8), particularly a portable computer, a tablet, a smartphone and/or smartglasses.

9. Procedure as claimed in at least one of the previous claims,
wherein multiple echo curves (EK, ...) and/or envelope curves (HK, ...) are determined in a recurrent manner, transmitted to the master control unit (4) and saved in the master control unit (4) and/or in a memory unit (10) connected thereto,
and wherein an echo curve (EK) and/or an envelope curve (HK) previously determined is/are used by the master control unit (4) for the evaluation of an echo curve (EK) and/or an envelope curve (HK) currently determined.

10. Procedure as claimed in at least one of the previous claims,
wherein, on the basis of the current process (P1, ...), the echo curve (EK) and/or the envelope curve (HK) currently determined is/are rejected and the useful echo signal (NE) of an echo curve (EK) and/or of an envelope curve (HK) determined previously is/are used to determine and/or monitor the level (L).

11. Procedure as claimed in at least one of the previous claims,
wherein the current process (P1, ...) comprises the control of actuators (AK1, AK2, ...), particularly valves and/or pumps, arranged on the inlets and/or outlets of the vessel (2),
and wherein particularly the plausibility of the identified useful echo signal (NE) is checked, on the basis of the current state of the actuators (AK1, AK2, ...) and on the basis of the comparison of the echo curve (EK) and/or the envelope curve (HK) currently determined, with an echo curve (EK) and/or an envelope curve (HK) previously determined.

12. Procedure as claimed in at least one of the previous claims,
wherein the current process (P1, ...) comprises the introduction of internal fittings (9) into the vessel (2) and/or a movement of internal fittings (9) in the vessel (2), particularly an agitation with an agitator located in the vessel (2) and/or a change in the speed of an agitation with an agitator located in the vessel (2),
and/or wherein the current process (P1, ...) comprises a cleaning - taking place in the vessel (2) - of the vessel (2) and/or internal fittings (9) located in the vessel (2).

13. Procedure as claimed in at least one of the previous claims,
wherein the current process (P1, ...) comprises an addition and/or an elimination by distillation at least of a fluid (13) by means of which, in particular, the dielectric constant of the medium (1) is increased or decreased and/or by means of which a proportion of foam in the medium (1) is increased or decreased.

14. Procedure as claimed in at least one of the previous claims,
wherein the medium (1) constitutes solid particles, and wherein the current process (P1, ...) comprises a fluidization of the medium (1).

15. Procedure as claimed in at least one of the previous claims,
wherein the vessel (2) is mobile, and wherein the current process (P1, ...) comprises a movement of the mobile vessel (2) and/or
wherein the current process (P1, ...) comprises a heating of the medium (1) and/or of the vessel (2).

## Revendications

1. Procédé destiné à la détermination et/ou à la surveillance du niveau (L) d'un produit (1) dans un réservoir (2) d'une installation de process avec un transmetteur de niveau (3) fonctionnant d'après le principe du temps de transit, lequel transmetteur émet, en mode de mesure (MB), des signaux de mesure (S) en direction du produit (1) dans le réservoir (2) et détermine, au moyen des parties de signal réfléchies dans le réservoir (2), une courbe d'écho (EK) qui représente les amplitudes (A) des parties de signal réfléchies en fonction du temps de transit (t), la courbe d'écho (EK) étant transmise à une unité de commande maître (4) de l'installation de process, et/ou une courbe enveloppe (HK) enveloppant la courbe d'écho (EK) étant créée et transmise à une unité de commande maître (4) de l'installation de process, la courbe d'écho (EK) et/ou la courbe enveloppe (HK) étant évaluée(s) par l'unité de commande maître (4), et le niveau étant déterminé dans l'unité de commande maître, un signal d'écho utile (NE) de la courbe d'écho (EK) et/ou de la courbe enveloppe (HK) étant identifié(s) lors de l'évaluation de la courbe d'écho (EK) et/ou de la courbe enveloppe (HK), signal dont le temps de propagation (t) sert de base à la détermination du niveau (L) actuellement présent,
procédé pour lequel le produit (1) et/ou le réservoir (2) est/sont soumis à au moins un process actuel (P1, ...) lors de la détermination et/ou de la surveillance du niveau,
procédé pour lequel des informations connues sur au moins un process actuel (P1, ...) sont enregistrées dans l'unité de commande maître (4),
et pour lequel la plausibilité du signal d'écho utile (NE) est contrôlée sur la base des informations sur le process actuel (P1, ...) et l'évaluation, notamment l'identification du signal d'écho utile (NE), est adaptée de manière dynamique au process actuel (P1, ...) respectif.

2. Procédé selon la revendication 1,
pour lequel des signaux d'écho parasites (SE) de la courbe d'écho (EK) et/ou de la courbe enveloppe (HK) sont identifiés lors de l'évaluation,
et pour lequel l'identification des signaux d'écho parasites (SE) est adaptée au process actuel (P1, ...) respectif.

3. Procédé selon au moins l'une des revendications précédentes,
pour lequel l'évaluation de la courbe d'écho (EK) et/ou de la courbe enveloppe (HK), notamment l'identification du signal d'écho utile (NE) et/ou des signaux d'écho parasite (SE), est effectuée au moyen d'un algorithme d'évaluation avec au moins un paramètre librement sélectionnable (5, ...),
et pour lequel l'au moins un paramètre librement sélectionnable (5, ...) est déterminé par le process actuel (P1, ...) respectif.

4. Procédé selon au moins l'une des revendications précédentes,
pour lequel, dans un mode d'initialisation différent du mode de mesure, de préférence dans le cadre d'une mise en service du transmetteur de niveau (3), le produit (1) et/ou le récipient (2) est/sont soumis à au moins un process (P1, ...) se produisant dans le mode de mesure,
pour lequel le transmetteur de niveau (3) émet, en mode d'initialisation, des signaux d'émission (S) en direction du produit (1) dans le réservoir (2) et détermine une courbe d'écho (EK) sur la base de parties de signaux réfléchies dans le réservoir (2),
pour lequel la courbe d'écho (EK) est transmise à une unité de commande maître (4) de l'installation de process et/ou une courbe enveloppe (HK) enveloppant la courbe d'écho (EK) est créée et transmise à l'unité de commande maître (4), pour lequel des influences du process (P1, ...) actuel sur la courbe d'écho (EK) et/ou la courbe enveloppe (HK) sont mesurées par l'unité de commande maître (4) et au moins une règle pour adapter l'évaluation - notamment pour adapter l'identification du signal d'écho utile (NE) et/ou des signaux d'écho parasite (SE), de préférence une sélection d'au moins un paramètre librement sélectionnable (5, ...) - est déterminée et mémorisée dans l'unité de commande maître (4), et pour lequel, en mode de mesure, la règle mémorisée en mode d'initialisation, de préférence l'au moins un paramètre librement sélectionnable (5, ...), est utilisée pour l'adaptation dynamique de l'évaluation - notamment pour l'adaptation dynamique de l'identification du signal d'écho utile (NE) et/ou des signaux d'écho parasites (SE) - au process actuel (P1, ...) respectif.

5. Procédé selon au moins l'une des revendications précédentes,
pour lequel la courbe d'écho (EK) et/ou la courbe enveloppe (HK) est/sont transmise(s) à l'unité de commande maître (4) via un réseau de communication (6), notamment via un bus de terrain de la technique d'automatisation et/ou via Ethernet, par fil et/ou sans fil, notamment de manière récurrente, indépendante et/ou sur demande de l'unité de commande maître (4).

6. Procédé selon au moins l'une des revendications précédentes,
pour lequel un niveau (L), déterminé à partir de la courbe d'écho (EK) et/ou de la courbe enveloppe (HK), et/ou des informations d'état, notamment des informations de diagnostic et/ou des informations sur le process actuel (P1, ...), est/sont transmis au moyen du réseau de communication (6) de l'unité de commande maître (4) vers au moins une unité d'affichage (7) et est/sont affiché(s) par l'unité d'affichage (7).

7. Procédé selon au moins l'une des revendications précédentes,
pour lequel l'au moins une unité d'affichage (7) est disposée sur le transmetteur de niveau (3).

8. Procédé selon au moins l'une des revendications 1 à 6,
pour lequel l'au moins une unité d'affichage (7) est disposée à l'extérieur de l'installation de process,
et/ou
pour lequel l'au moins une unité d'affichage (7) fait partie d'un terminal mobile (8), notamment un ordinateur portable, une tablette, un smartphone et/ou des lunettes intelligentes.

9. Procédé selon au moins l'une des revendications précédentes,
pour lequel plusieurs courbes d'écho (EK, ...) et/ou courbes enveloppes (HK, ...) sont déterminées de manière récurrente, transmises à l'unité de commande maître (4) et mémorisées dans l'unité de commande maître (4) et/ou dans une unité de mémoire (10) reliée à celle-ci,
et pour lequel une courbe d'écho (EK) et/ou une courbe enveloppe (HK) précédemment déterminée(s) est/sont utilisée(s) par l'unité de commande maître (4) pour évaluer une courbe d'écho (EK) et/ou une courbe enveloppe (HK) actuellement déterminée.

10. Procédé selon au moins l'une des revendications précédentes,
pour lequel, sur la base du process actuel (P1, ...) respectif, la courbe d'écho (EK) et/ou la courbe enveloppe (HK) actuellement déterminée(s) est/sont rejetée(s) et le signal d'écho utile (NE) d'une courbe d'écho (EK) et/ou d'une courbe enveloppe (HK) précédemment déterminée(s) est/sont utilisée(s) pour déterminer et/ou surveiller le niveau (L).

11. Procédé selon au moins l'une des revendications précédentes,
pour lequel le process actuel (P1, ...) comprend la commande d'actionneurs (AK1, AK2, ...), notamment de vannes et/ou de pompes, disposés sur les entrées et/ou les sorties du réservoir (2),
et pour lequel notamment la plausibilité du signal d'écho utile (NE) identifié est contrôlée sur la base de l'état actuel des actionneurs (AK1, AK2, ...) et sur la base de la comparaison de la courbe d'écho (EK) et/ou de la courbe enveloppe (HK) actuellement déterminée avec une courbe d'écho (EK) et/ou une courbe enveloppe (HK) précédemment déterminée.

12. Procédé selon au moins l'une des revendications précédentes,
pour lequel le process actuel (P1, ...) comprend une introduction d'éléments internes (9) dans le réservoir (2) et/ou un mouvement d'éléments internes (9) dans le réservoir (2), notamment une agitation avec un agitateur situé dans le réservoir (2) et/ou une modification de la vitesse de rotation d'une agitation avec un agitateur situé dans le réservoir (2),
et/ou pour lequel le process actuel (P1, ...) comprend un nettoyage du réservoir (2) - ayant lieu dans le réservoir (2) - et/ou des éléments internes (9) disposés dans le réservoir (2).

13. Procédé selon au moins l'une des revendications précédentes,
pour lequel le process actuel (P1, ...) comprend une addition et/ou une élimination par distillation d'au moins un fluide (13), par laquelle notamment la constante diélectrique du produit (1) est augmentée ou diminuée et/ou par laquelle une proportion de mousse dans le produit (1) est augmentée ou diminuée.

14. Procédé selon au moins l'une des revendications précédentes,
pour lequel il s'agit, concernant le produit (1), de particules solides, et pour lequel le process actuel (P1, ...) comprend une fluidification du produit (1).

15. Procédé selon au moins l'une des revendications précédentes,
pour lequel le réservoir (2) est mobile, et pour lequel le process actuel (P1, ...) comprend un déplacement du réservoir (2) mobile et/ou
pour lequel le process actuel (P1, ...) comprend un chauffage du produit (1) et/ou du réservoir (2).
